# FASCICULE DE BREVET EUROPEEN

(11) **EP 2 689 541 B1**
(45) Date de publication et mention de la délivrance du brevet: **02.05.2018**
(21) Numéro de dépôt: 12707796.4
(22) Date de dépôt: 12.03.2012
(51) Int. Cl.: H04B 7/06, H04B 7/08

(54) **DISPOSITIF DE COMMUNICATION TDMA À DEUX ANTENNES ÉMETTANT DEUX BALISES**
TDMA-KOMMUNIKATIONSVORRICHTUNG MIT ZWEI ANTENNEN ZUR ÜBERTRAGUNG VON ZWEI BAKEN
TDMA COMMUNICATION DEVICE HAVING TWO ANTENNAS TRANSMITTING TWO BEACONS

(30) Priorité: 22.03.2011 FR 1152343
(43) Date de publication de la demande: 29.01.2014
(73) Titulaire: Safran Electronics & Defense, 92100 Boulogne-Billancourt (FR)
(72) Inventeur: BARD, Yves, F-75015 Paris (FR); BREVALLE, Christophe, F-75015 Paris (FR); LEJAY, Laurent, F-75015 Paris (FR); COURTET, Patrice, F-75015 Paris (FR)
(74) Mandataire: Le Guen-Maillet
(86) Numéro de dépôt international: PCT/EP2012/054217
(87) Numéro de publication internationale: WO 2012/126755

(56) Documents cités:
- EP-A2- 2 141 827
- WO-A1-01/41330
- WO-A1-2008/052204
- FR-A1- 2 932 626

## Description

La présente invention concerne le domaine des systèmes de communication radio et plus particulièrement des systèmes de communication de groupe utilisant une technologie TDMA (*Time Division Multiple Access* en anglais) semi-duplex (*half duplex* en anglais) hiérarchique.

Le système est dit de groupe en ce sens qu'il permet la communication entre une pluralité de combinés radio au sein d'un groupe communiquant. Il est hiérarchique, car le système repose sur la définition d'un combiné comme base, les autres combinés viennent établir une connexion avec cette base. Le fonctionnement des combinés est asymétrique, chaque combiné se connecte avec la base et ne communique directement qu'avec celle-ci.

Le système est TDMA dans le sens où le temps est divisé en trames servant à la communication. Chaque trame est elle-même divisée en intervalles de temps élémentaires appelés intervalles de temps (*time slot* en anglais) pour la communication. Cette communication est également multi fréquence, c'est-à-dire que le système peut communiquer sur une pluralité de fréquences. Le canal de transmission peut donc être vu comme un arrangement à deux dimensions, une
dimension temporelle et une dimension fréquentielle, qui définit des unités de communication élémentaires (*slots* en anglais) correspondant à un couple intervalle de temps et fréquence permettant la communication.

Le système est semi-duplex dans le sens où la communication base vers combiné, appelée communication descendante, et la communication combiné vers base, appelée communication montante, n'est pas simultanée, mais répartie sur des intervalles de temps différents. Typiquement, la trame est divisée en deux parties, une partie dédiée au trafic descendant et une partie dédiée au trafic montant.

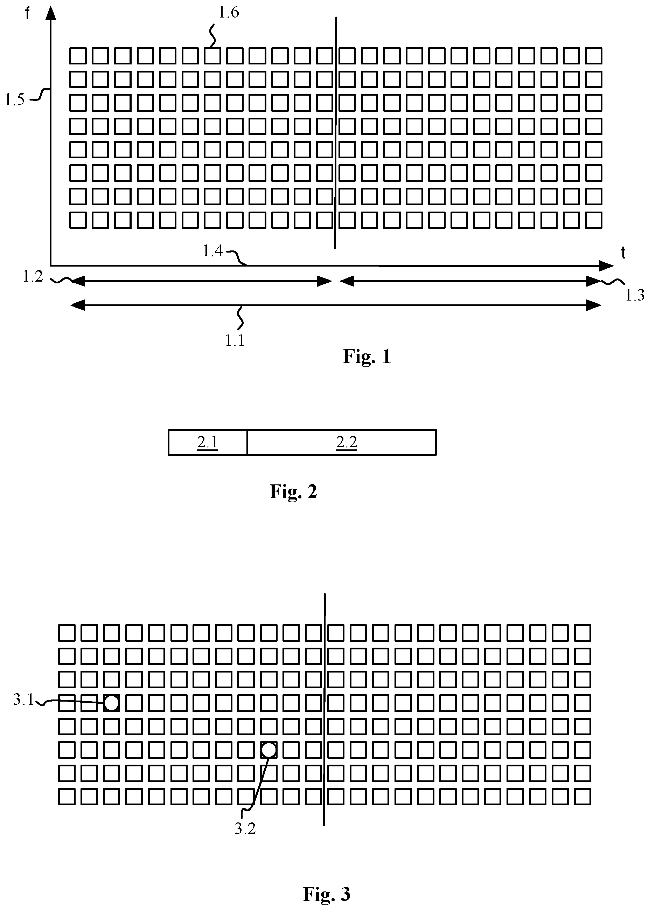

La Fig. 1 illustre la structure de la trame dans l'exemple de réalisation de l'invention. La trame 1.1 est divisée en une première partie 1.2 consacrée au trafic descendant émis par la base vers les combinés, et une seconde partie 1.3 consacrée au trafic montant des combinés vers la base. Elle s'exprime selon l'axe du temps 1.4 et l'axe fréquentiel 1.5. Elle définit des unités élémentaires de communication 1.6 définies par une fréquence donnée et d'une durée équivalente à l'intervalle temporel élémentaire. La durée de la trame est, dans l'exemple de réalisation, de l'ordre de 10 ms divisée en deux fois 12 intervalles élémentaires de temps. Cette trame se répète périodiquement.

Le système de communication est destiné à un groupe d'individus mobiles qui portent sur eux-mêmes le combiné de communication. Le corps de l'utilisateur pouvant masquer l'antenne du combiné selon la position de l'utilisateur et sa localisation par rapport à l'individu porteur de la base, le combiné dispose avantageusement de deux antennes disposées à des endroits différents de la tenue de l'utilisateur. Typiquement une première antenne est disposée sur un côté du torse tandis que la seconde antenne est disposée sur l'épaule opposée.

Pour permettre la connexion d'un combiné à la base, celle-ci émet un signal appelé balise. Ce signal utilise l'une des unités élémentaires de la trame dans sa partie descendante. Ce signal est donc émis périodiquement lors de chaque trame et contient les informations de signalisation et de synchronisation nécessaires au combiné pour se connecter et se synchroniser sur la base de manière à pouvoir communiquer avec elle. Ce signal de balise est typiquement émis sur une antenne prédéfinie.

La demande de brevet français de référence FR 2 932 626 A1 publiée le 18 décembre 2009 concerne un procédé pour relayer un signal de balise ou un signal de trafic d'une communication radiofréquence établie entre des appareils de communication situés dans des environnements à relayer. Une antenne étant située dans
chaque environnement, le procédé est caractérisé en ce qu'il comporte une étape de réception par au moins une antenne du signal de balise ou de trafic, une étape pour générer un signal, dit relayé, à partir du signal reçu, et une étape d'émission simultanée par chaque antenne du signal relayé, le niveau de puissance du signal relayé qui est émis par antenne étant égal à un pourcentage du niveau de puissance total du signal relayé. Le procédé proposé concerne toutefois des appareils situés dans des environnements différents.

L'invention vise à améliorer la portée du système décrit en proposant l'émission d'une seconde balise sur la seconde antenne. De cette façon, les combinés dont la position implique le masquage de la première antenne peuvent recevoir la balise émise par la seconde antenne et se connecter à la base. Des modes de réalisation particuliers permettent de limiter la consommation d'unités de communication de base en utilisant des unités utilisées pour la communication pour porter cette seconde balise.

L'invention concerne un dispositif de communication tel que défini par la revendication 1. Des modes particuliers de réalisation de l'invention sont définis par les revendications dépendantes. Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre la structure de la trame dans un exemple de réalisation de l'invention.
La Fig. 2 illustre la structure du paquet de données émis dans une unité de communication dans l'exemple de réalisation de l'invention.
La Fig. 3 illustre la structure de la trame dans un premier mode de réalisation de l'invention.
La Fig. 4 illustre la structure de la trame dans un second mode de réalisation.

Les systèmes de l'art antérieur fonctionnant selon le principe décrit avec deux antennes implémentent un mécanisme de bascule d'antenne lors des communications. Selon ce mécanisme la communication implique typiquement un couple associé d'unités de communication, un premier dans la première demi trame descendante et le second sur la même fréquence à l'intervalle de temps décalé de 12 dans la demi-trame montante. La réception du signal se fait sur les deux antennes. Pour chaque unité de communication, le récepteur détermine l'antenne sur laquelle le signal reçu est le plus fort. Cette antenne est alors sélectionnée pour l'émission de la réponse. On assume que dans le laps de temps entre la réception du signal et l'émission de la réponse, la position des interlocuteurs n'a que peu varié et que généralement la meilleure antenne en réception se retrouve également être la meilleure antenne en émission. De fait, les mesures montrent que la portée du système définie comme la distance maximum à laquelle la communication reste opérante augmente lors de l'utilisation de ce mécanisme de bascule des antennes.

Le signal émis est émis sous la forme d'un paquet de données émis au sein d'une unité de communication. Ce paquet de données est illustré par la Fig. 2 selon l'exemple de réalisation de l'invention. Dans d'autres modes de réalisation, il pourrait prendre une forme différente. Dans cet exemple, le paquet de données est composé d'un en-tête 2.1 qui contient des informations de signalisation et de protocole et d'une partie donnée 2.2 qui contient les données échangées proprement dites. Typiquement, la partie donnée contient les échantillons audio lors d'une communication voix.

Le signal de balise émis par la base pour permettre la connexion des combinés est constitué d'informations de signalisation contenues dans l'en-tête du paquet de données. La partie donnée du paquet n'est donc pas impactée par les informations de balise. Ce signal est destiné à un nombre quelconque de combinés et ne participe pas à un échange de données. Il ne peut donc pas bénéficier du mécanisme de bascule d'antenne décrit plus haut pour tenter de déterminer lors de chaque émission la meilleure antenne pour émettre la balise. Celle-ci est donc émise par défaut sur une antenne prédéfinie. Il arrive donc qu'un combiné puisse ne pas recevoir le signal de balise, car cette antenne est masquée alors même qu'un signal émis par la seconde antenne pourrait être reçu.

L'invention propose de doter la base de moyens pour émettre un second signal balise sur la seconde antenne. Ainsi, chaque trame dispose de deux signaux balise, les deux signaux balise sont émis au sein de deux unités de communication différentes et sur des antennes différentes. Ainsi, un combiné cherchant à se connecter à la base peut choisir pour ce faire le signal balise qu'il reçoit le mieux, voire le seul qu'il reçoit. On bénéficie ainsi de la diversité d'antennes dans le contexte de la réception du signal balise et de la connexion du combiné.

Selon l'art antérieur où une seule balise est émise par la base, lorsqu'un combiné connecté à la base perd le signal balise, il perd la connexion avec la base. Selon l'invention, le combiné reçoit les deux signaux balise émis par la base. Il se connecte sur le signal balise reçu avec le plus de puissance. S'il advient qu'il perde la réception du signal balise lui ayant servi à se connecter, il effectue un saut de balise. Pour cela, il est doté de moyens pour basculer automatiquement sa connexion sur la seconde balise lorsqu'il perd la réception de la balise sur laquelle il est connecté.

Le système de communication décrit permet la communication d'un combiné avec la base. Il comprend également typiquement un mode de diffusion dans lequel le porteur de la base communique avec l'ensemble des combinés connectés.

D'autre part, le système décrit possède aussi la caractéristique de diffuser la communication d'un combiné de façon à ce que l'ensemble des combinés connectés soit en mesure d'écouter l'émission d'un des combinés. Ces caractéristiques conduisent à différencier plusieurs modes de fonctionnement du système que nous allons décrire plus avant.

Dans un premier mode, personne ne parle, la base émet donc ses deux balises sur ses deux antennes. Ce mode est illustré par la trame de la Fig. 3. Une première balise est émise sur une première antenne au sein de l'unité de communication 3.1 tandis que la seconde est émise sur l'autre antenne au sein de l'unité de communication 3.2. Chacune de ces émissions implique l'envoi d'un paquet de données dont seul l'en-tête est utilisé par les informations de signalisation du signal balise. La partie donnée du paquet n'est pas définie.

Dans un second mode, le porteur de la base parle en mode diffusion à destination de l'ensemble du groupe. Selon l'art antérieur, les diffusions faites par la base utilisent la partie donnée du paquet servant à l'émission de la balise pour éviter de consommer une unité de communication supplémentaire dans la trame. Ce procédé peut être repris dans l'invention. Dans ce second mode de réalisation, l'audio diffusé par la base est donc émis dans la partie donnée de l'un des paquets balise émis au sein de la trame. Avantageusement, selon le mode de réalisation préféré de l'invention, cet audio est dupliqué dans les deux balises. Dans ce mode, les paquets de données des deux signaux de balise contiennent chacun un en-tête différent correspondant à la signalisation de leur balise respective et la même partie donnée dupliquée. De cette façon, les combinés en limite de portée augmentent leur chance de recevoir les données audio diffusées. Ils peuvent choisir le signal le mieux reçu. Il en va de même quelle que soit la nature du message diffusé, voix ou données, les données sont alors également dupliquées dans la partie donnée des paquets des deux balises.

Dans un troisième mode, un porteur de combiné prend la parole. Il a besoin pour ce faire d'un canal de transmission. On définit ici le canal de transmission comme un couple d'unités de communication élémentaires, une unité par sens de communication. Une première unité dans la sous-trame descendante et une seconde dans la sous-trame montante. Typiquement, ces unités sont correspondantes, c'est-à-dire qu'elles utilisent la même fréquence et sont séparées par 12 intervalles de temps élémentaires. Dans ce mode, l'audio émis par le combiné est émis dans le canal de transmission réservé. Avantageusement, cet audio est réémis par la base à destination de tous les combinés connectés en mode diffusion. Dans ce cas, il est émis, de façon dupliquée, dans les parties données des paquets balise.

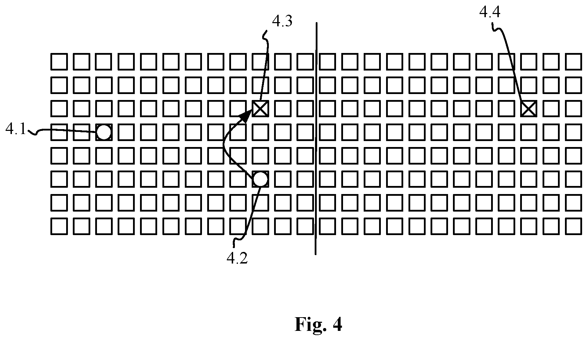

Avantageusement, lorsque la communication est établie et que le canal de transmission est réservé, la base supprime l'une des deux balises pour la transférer sur le canal réservé. Il est ainsi possible d'économiser une unité de communication. Les informations de signalisation nécessaires à la balise sont alors transmises dans l'en-tête du paquet de données émis dans le canal de transmission réservé pour la communication. Dans ce mode, illustré Fig. 4, les deux balises sont émises au sein des unités de communication 4.1 et 4.2. Un combiné provoque la réservation d'un canal de transmission pour émettre, ce canal est réservé, il est constitué des unités de communication correspondantes 4.3 et 4.4. La base possède alors les moyens pour supprimer la balise émise au sein de l'unité de communication 4.2 et donc de déplacer le signal balise pour l'émettre au sein de l'unité de communication 4.3 du canal de communication réservé. Préalablement, elle aura averti les combinés connectés de ce changement d'unité de communication pour l'émission de la balise.

Nous avons vu que les transmissions bénéficient avantageusement du mécanisme de bascule d'antenne pour améliorer la portée. Selon ce mécanisme, un signal est émis sur l'antenne où la réception du signal correspondant était la meilleure lors de la trame précédente. Dans ce mode de réalisation, le signal émis au sein de l'unité de communication 4.3 va donc être émis tantôt sur la première antenne, tantôt sur la seconde, selon la qualité du signal reçu au sein de l'unité de communication 4.4 de la trame précédente. Or, les balises sont émises chacune sur une antenne. Lorsque la balise est portée par une unité de communication sujet au mécanisme de bascule d'antenne, il est donc nécessaire de basculer l'antenne d'émission de l'autre balise de manière synchronisée de façon à ce que, lors de chaque trame, chaque balise continue à être émise sur une antenne différente. Avantageusement, la base est donc dotée de moyens pour émettre le premier signal balise n'ayant pas été déplacé vers le canal de transmission réservé sur l'antenne qui n'est pas sélectionnée pour l'émission dudit canal de transmission réservé.

L'invention est décrite pour un système où les combinés comportent deux antennes, elle peut être étendue naturellement à un système où les combinés comportent trois antennes ou plus. Dans ce cas, il peut être émis un nombre quelconque de signaux balise entre deux et le nombre d'antennes.

## Revendications

1. Dispositif de communication pour communiquer dans un système de communication radio TDMA semi-duplex hiérarchique, le canal de transmission étant défini par une trame temps-fréquence d'unités de communication élémentaires définis par une fréquence et une durée égale à un intervalle de temps élémentaire, comprenant :
- au moins deux antennes ;
- des moyens pour émettre un premier signal balise contenu dans l'en-tête (2.1) de paquets de données émis au sein d'une première unité de communication élémentaire sur une première antenne ;
- des moyens pour émettre un second signal balise contenu dans l'en-tête (2.1) de paquets de données émis au sein d'une seconde unité de communication élémentaire sur une seconde antenne ;
- chaque paquet de données comportant outre un en-tête une partie de données (2.2) ;
**caractérisé en ce qu'**il comporte en outre :
- des moyens pour dupliquer des données, devant être diffusées depuis ledit dispositif, au sein des seules parties de données des paquets de données respectivement émis au sein des première et seconde unités de communication élémentaire, si bien que lesdits paquets de données ont leurs en-têtes respectifs qui portent les premier et second signaux de balise et leurs parties de données, identiques, contiennent lesdites données dupliquées.

2. Dispositif de communication selon la revendication 1, **caractérisé en ce que**, un canal de transmission composé d'une paire d'unités de communication (4.3, 4.4), une unité par sens de communication, ayant été réservé pour une communication, ledit dispositif comporte en outre des moyens pour déplacer ledit second signal balise pour l'émettre au sein de l'unité de communication du canal réservé.

3. Dispositif de communication selon la revendication 2, qui comporte :
- des moyens pour émettre le signal émis sur le canal réservé sur l'antenne ayant bénéficié de la meilleure réception lors de la trame précédente ;
**caractérisé en ce qu'**il comporte en outre :
- des moyens pour émettre le premier signal balise n'ayant pas été déplacé vers le canal de transmission sur l'antenne qui n'est pas sélectionnée pour l'émission dudit canal de transmission réservé.

## Patentansprüche

1. Kommunikationsvorrichtung, um in einem hierarchischen Halbduplex-TDMA-Funkkommunikationssystem zu kommunizieren, wobei der Übertragungskanal durch einen Zeit-Frequenz-Raster von elementaren Kommunikationseinheiten definiert ist, die durch eine Frequenz und eine Dauer gleich einem elementaren Zeitintervall definiert sind, umfassend:
- mindestens zwei Antennen;
- Mittel, um ein erstes Bakensignal zu senden, das im Header (2.1) von Datenpaketen enthalten ist, die in einer ersten elementaren Kommunikationseinheit auf einer ersten Antenne gesandt werden;
- Mittel, um ein zweites Bakensignal zu senden, das im Header (2.1) von Datenpaketen enthalten ist, die in einer zweiten elementaren Kommunikationseinheit auf einer zweiten Antenne gesandt werden;
- wobei jedes Datenpaket ferner einen Header (2.2) eines Datenteils umfasst;
**dadurch gekennzeichnet, dass** sie ferner umfasst:
- Mittel, um Daten, die von der Vorrichtung verbreitet werden sollen, nur innerhalb der Datenteile der Datenpakete, die in den ersten bzw. zweiten elementaren Kommunikationseinheiten gesandt werden, zu duplizieren, so dass die Datenpakete ihre jeweiligen Header haben, die die ersten und zweiten Bakensignale tragen, und ihre Datenteile, die identisch sind, die duplizierten Daten enthalten.

2. Kommunikationsvorrichtung nach Anspruch 1, **dadurch gekennzeichnet, dass**, wobei ein Übertragungskanal, bestehend aus einem Paar von Kommunikationseinheiten (4.3, 4.4), einer Einheit pro Kommunikationsrichtung, für eine Kommunikation reserviert wurde, die Vorrichtung ferner Mittel umfasst, um das zweite Bakensignal zu verschieben, um es in der Kommunikationseinheit des reservierten Kanals zu senden.

3. Kommunikationsvorrichtung nach Anspruch 2, umfassend:
- Mittel, um das auf dem reservierten Kanal auf der Antenne zu senden, die beim vorhergehenden Raster den besten Empfang hatte;
**dadurch gekennzeichnet, dass** sie ferner umfasst:
- Mittel , um das erste Bakensignal, das nicht verschoben wurde, zu dem Übertragungskanal auf der Antenne, die nicht für das Senden des reservierten Übertragungskanals verwendet wurde, zu senden.

## Claims

1. A communication device intended to communicate in a hierarchical half-duplex TDMA radio communication system, the transmission channel being defined by a time-frequency frame of elementary communication units defined by a frequency and a duration equal to an interval of unit time, comprising:
- at least two antennas;
- means for transmitting a first beacon signal contained in a header (2.1) of data packets transmitted in a first elementary communication unit on a first antenna;
- means for transmitting a second beacon signal contained in said header (2.1) of data packets transmitted in a second elementary communication unit on a second antenna;
- each data packet further comprising a payload for data (2.2),
**characterized in that** it further comprises:
- means for duplicating data to be broadcast from said device, in the only parts of data of the packets respectively transmitted in the first and second elementary communication units, so that said data packets have their respective headers carrying the first and second beacon signals and their payloads are identical and contain said replicated data.

2. A communication device according to claim 1, **characterized in that** a transmission channel is composed of a pair of communication units (4.3, 4.4), one for each communication direction, reserved for a communication, said device further comprises means for moving said second beacon signal and for transmitting in the communication unit of the reserved channel.

3. A communication device according to claim 2, which comprises:
- means for transmitting the signal on the reserved channel on the antenna that has the best reception in the previous frame,
**characterized in that** it further comprises:
- means for transmitting the first beacon signal that has not been moved to the transmission channel on the antenna that is not selected for transmission of said reserved transmission channel.
